# EUROPEAN PATENT SPECIFICATION

(11) **EP 2 712 152 B1**
(45) Date of publication and mention of the grant of the patent: **14.09.2016**
(21) Application number: 12185720.5
(22) Date of filing: 24.09.2012
(51) Int. Cl.: G06F 3/14, H04N 21/41, H04N 21/422, H04N 21/431, H04N 21/4363, G06F 3/0488, H04M 1/60, G09G 5/00

(54) **Method and Device**
Verfahren und Vorrichtung
Procédé et dispositif

(43) Date of publication of application: 26.03.2014
(73) Proprietor: DENSO CORPORATION, Kariya Aichi 448-8661 (JP)
(72) Inventor: Ashley, Jon, Solihull, B91 1TE (GB)
(74) Representative: D Young & Co LLP

(56) References cited:
- WO-A1-2011/118859
- KR-A- 20120 037 638
- US-A1- 2003 025 678
- US-A1- 2009 081 950
- US-B1- 7 970 436

## Description

### FIELD

The present disclosure relates to displaying content of a mobile device using a connected system and in particular but not exclusively to simultaneously displaying first content from the mobile device using a connected system and displaying second content or zero content from the mobile device using a display of the mobile device.

### BACKGROUND

In the field of in-vehicle use of mobile devices, considerations such as safety (often controlled by civil and criminal law) and functionality can cause conflict between the desire of a vehicle operator to have access to functionality of the mobile device and the need for such functionality not to distract the vehicle operator from, or impede the vehicle operator in, proper and safe operation of the vehicle.

Some vehicles are equipped with audio systems that can connect to a mobile device such as a portable music device to enable music playback of stored music from the mobile music device using the audio system of the vehicle. Some vehicles are equipped with telephone interface systems that enable calls to be made and received in a hands-free manner by a vehicle operator while the vehicle operator is operating the vehicle. Concept vehicles have been shown that illustrate the concept of using a mobile device as an in vehicle audio and navigation system such that no dedicated in vehicle system or display is provided.

Mobile devices can also be connected to systems outside a vehicle for remote playback of content therefrom. Such devices are able to output video content to a display of a connected system.

US 7,970,436 describes a wireless interface extension for mobile devices that includes a user interface, a wireless communication link, and a processor. The processor communicates with a mobile device over the wireless communication link and enables a user to use the user interface to interact with at least one user application on the mobile device. This document does not teach or suggest, in a method for using a mobile device as an input device for a connected in-vehicle system, presenting on a display of the mobile device visual content different from visual content displayed on the display of the connected in-vehicle system, the visual content comprising an input interface for control of visual content from the mobile device displayed of the display of the connected in-vehicle system, wherein the input interface is a touchscreen of the mobile device and input gestures can be made thereon in order to access the functionality of the mobile device as displayed via the display of the connected in-vehicle system.

WO 2011/118859 describes a method and related system of displaying to a user at a user display device content delivered wirelessly from a remote server, and of displaying to the user content from a mobile radio communications device, the method comprising the steps of routing the content from the remote server to the user display device via the mobile radio communications device, and delivering content from the mobile radio communications device to the user display device for display thereon, and in this manner a user device such as a mobile phone can have the subject of its display delivered to a remote display device for display in combination with, for example, a PC application running as a remote server, and further wherein the user interface devices associated with the display device can be employed to interact with the remote server and the mobile radio communications device.

US 2003/025678 discloses a method for displaying information of a portable terminal through an external display device connected thereto. A touchscreen of the portable terminal can be used in a "mouse pad operation mode" whereby determining the position of the mouse pointer on the external display.

KR 2012 0037638 describes a method to continuously show in the mobile device display the state and acceptance of the mobile device in a cradle.

### SUMMARY

Specific aspects of the present invention are set out in the appended claims.

Aspects of the present teachings can provide for mobile device to be connectable to a remote system to provide for display of content from the mobile device on a display of the connected system simultaneously with display of content differing from a usual user interface or application interface of the mobile device on a display of the mobile device. The different content may be second content or zero content. Simultaneous with this display of second content one or more input sensors of the mobile device may be used to receive input in a mode different to a normal input mode for the mobile device. This different mode may be an input mode such as a trackpad-style input mode.

Viewed from a first aspect, there can be provided a method for using a mobile device as an input device for a connected system, the method comprising: connecting the mobile device to output visual content therefrom for display on a display of a connected system; and presenting on a display of the mobile device an input interface for control of visual content from the mobile device displayed of the display of the connected device. Thereby a mobile device can be connected to a remote device to output content thereto and can simultaneously provide a dedicated user interface for controlling the content output to the remote device using the mobile device to receive user interface inputs.

Viewed from another aspect, there can be provided a method for using a mobile device as an input device for an in-vehicle system, the method comprising: connecting the mobile device to output visual content therefrom for display on a display of an in-vehicle system; presenting on a display of the mobile device visual content different from the visual content outputted to the in-vehicle system. Thus in-vehicle use of a mobile device can be facilitated in a manner that operates to avoids or reduce driver distraction while enabling the convenient provision of control inputs to the mobile device for control of the content displayed in a vehicle display.

Viewed from a further aspect, there can be provided a mobile device comprising: a data output operable to connect the mobile device to output visual content therefrom for display on a display of a connected system; and a display operable to display visual content different from the visual content outputted via the data output. Thus a mobile device can be provided that enables output of content from an application thereof to a remote display and simultaneously provides for a user interface for control of that application to be provided on the mobile device.

In some examples, a computer program can be provided comprising mobile device implementable instructions for causing a programmable mobile device to become configured as the mobile device. Thus an add-on application can be provided to add such functionality to an already programmed mobile device.

Viewed from another aspect, there can be provided a system comprising a data input configured to receive visual content from a connected mobile device while the mobile device is simultaneously outputting different visual content via a display of the mobile device. Thus system provided with capability for receiving mobile device originating content while the mobile device from which the content originates provides a user interface for controlling that content to a user.

In some examples, a computer program can be provided comprising system implementable instructions for causing a programmable in vehicle system to become configured as the system. Thus an add-on application can be provided to add such functionality to an already programmed system.

Viewed from a further aspect, there can be provided a method for using a mobile device as an input device for an audio-visual system, the method comprising: connecting the mobile device to output visual content therefrom for display on a display of an audio-visual system; presenting on a display of the mobile device visual content different from the visual content outputted to the audio-visual system. Thus an audio-visual system can conveniently receive display content from a mobile device that simultaneously provides a user interface for controlling that content on the mobile device from which the content is provided.

Viewed from another aspect, there can be provided a mobile device, comprising: a touchscreen display configured to display visual content and to receive inputs; a data interface configured to send data to and receive data from an external connected system; a data memory configured to store execution instructions corresponding to one or more applications; a processor configured: to execute the one or more applications; to cause visual content relating to an executed one of said one or more applications to be sent for remote display via said data interface; to accept inputs for controlling the executed one of said one or more applications via the touchscreen display while the visual content relating to an executed one of said one or more applications is being sent for remote display via said data interface. Thus a mobile device having an application for routing display content to a remote display instead of a touchscreen of the device can at the same time provide on the touchscreen an interface for receiving inputs to control the content routed for remote display.

### BRIEF DESCRIPTION OF THE FIGURES

For a better understanding of the presently teachings and to show how the same may be carried into effect reference is now made by way of example to the accompanying drawings in which:
Figure 1 is a schematic representation of an in-vehicle environment having a receiving location for a mobile device;
Figure 2 is a schematic block diagram of a mobile device and an in-vehicle system;
Figure 3 is an example of simultaneous displaying of different mobile device originating content on the display of the mobile device and an in vehicle display;
Figure 4 is an example of simultaneous displaying of different mobile device originating content on the display of the mobile device and an in vehicle display;
Figure 5 is an example of displaying of mobile device originating content on an in vehicle display simultaneously with the display of the mobile device being in an off state;
Figure 6a is a schematic illustration of logical elements of a mobile device in a normal operation mode;
Figure 6b is a schematic illustration of logical elements of a mobile device and an in vehicle system in a cooperatively connected mode.
Figure 7 is a schematic representation of data flows between a mobile device and an in vehicle system in three operation contexts; and
Figure 8 is a representation of a mobile device connected to a display system.

While the present teachings are susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the present invention as defined by the appended claims.

### DETAILED DESCRIPTION

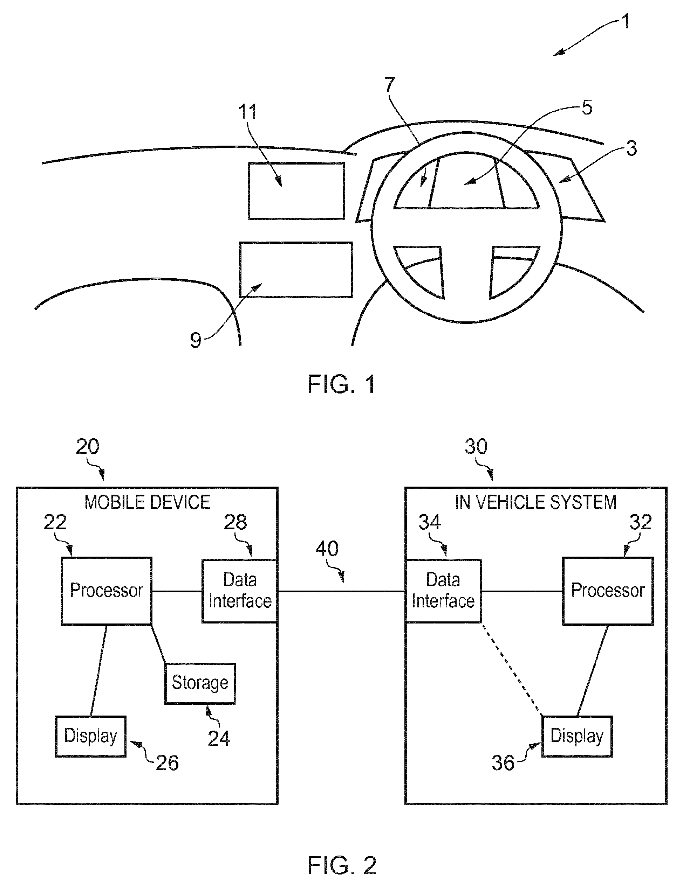

As is illustrated in Figure 1, a mobile device may be deployed in the context of an in-vehicle situation. Mobile devices of many types may have utility in an in vehicle context. For example, a mobile media device may be used for audio playback in the vehicle and/or for video playback to persons in the vehicle (typically to persons other than the vehicle operator for reasons of safety). Another example of a mobile device is a mobile navigation device which may be used to provide navigation instructions to a vehicle operator of a vehicle which has no built-in navigation function for a region of interest. Another example of a mobile device is a mobile telephone which may be used to provide telephone communication capability for a vehicle operator or passenger. A mobile telephone may be a so-called smartphone which may in addition to telephony capability may provide other capabilities such as audio and/or video media playback, navigation functions, address book functions, mobile messaging functionality or any other smartphone capability. Another example of a mobile device may be a so-called tablet device which may provide similar and/or additional functions to those provided by a smartphone.

As depicted in Figure 1, a vehicle interior 1 such as a vehicle dashboard of a vehicle such as a car, van or truck can be provided with a number of dynamically configurable displays 3, 5, 7 and 9. Each of these displays can be controlled by in-vehicle processing capability to display information relating to operation of the vehicle (such as vehicle speed, engine speed, temperature, fuel level, transient operational conditions and the like), information relating to other in vehicle functionality (such as audio playback, navigation and the like) and information received from a separate device (such as audio playback information from a connected media playback device, navigation information from a connected navigation device, message information from a connected messaging device, address details from a connected address list providing device and the like). The vehicle interior can also be provided with a mobile device receiving location 11. In the present examples, the mobile device receiving location may be in view of and in reach of a vehicle operator or may be distant from or out of sight of a vehicle operator as will be discussed in more detail below.

The arrangements of the present teachings may be additionally applicable to vehicles other than cars, vans and trucks having a dashboard type configuration as discussed above. For example, a straddle-type vehicle such as a motorcycle or motorscooter may be provided with an arrangement for connecting a mobile device to provide content therefrom to a display of the vehicle. Such an arrangement could be used for example to provide navigation information to a vehicle operator. In another example, an aircraft such as a helicopter or aeroplane may be provided with an arrangement for connecting a mobile device to provide content therefrom to a display of the aircraft. Such an arrangement could be provided to enable messaging information received by a mobile device or navigation information to be displayed on a display of the aircraft. This could be of utility for example in the context of an emergency services aircraft that needs to receive emergency situation updates in written form via a mobile messaging device in addition to or instead of in audio form via radio. In another example, a water vessel such as a yacht could be provided with an arrangement for connecting a mobile device to provide content therefrom to a display of the vessel. Such an arrangement could be provided to enable navigation information or emergency services messaging information to a vehicle operator. It is envisaged that all such uses are included within the concept of in-vehicle use and any such vehicle can include an in vehicle system capable of interfacing with a mobile device as set out in the present teachings.

Figure 2 shows schematically a block diagram of connected a mobile device 20 and an in-vehicle system 30. As is shown in Figure 2, the mobile device 20 includes a processor 22 that controls operations of the mobile device. The processor 22 has access to storage 24 in which data that specifies an operating system and/or one or more applications executable by the mobile device can be stored. In the context of a mobile device in the form of a smartphone or tablet device, such applications may commonly be referred to as apps. Under normal operation of the mobile device, the results of the operating system and/or applications can be presented to a user of the mobile device using a display 26. In the context of the present examples, the display 26 typically also functions as an input receiving element in the form of a touchscreen display. The input functionality may be provided as an integrated function of the display or by the addition of a touch-sensitive overlay for the display. The input functionality may be provided in any suitable form, such as resistive touch-sensitivity or capacitive touch-sensitivity. The mobile device 20 of the present example also includes a data interface 28 that can be used as a data output for outputting data and/or instructions from the mobile device to an external entity. The data interface 28 can typically also function as a data input for receiving data and/or instructions from a remote entity.

In the present example, the data interface 28 of the mobile device 20 connects with an in vehicle system 30 via a channel 40. The in vehicle system 30 includes a processor 32 that controls operations of the in vehicle system. The processor 32 can communicate with a connected device via a data interface 34 that can be used as a data input for receiving data and/or instructions from a connected device. The data interface 34 can typically also function as a data output for outputting data and/or instructions from a remote entity. The in vehicle system 30 also includes a display 36 that can display data under control of the processor 32. The display 36 of the present examples can display data received via the data interface 34. The display 36 can include all, some of or parts of the various displays 3, 5, 7, 9 provided in the vehicle.

In the present example, the channel 40 and the corresponding data interfaces 28 and 34 can be any channel capable of providing a suitable connection between the mobile device 20 and the in vehicle system 30. Examples include wired connections such as USB (either using a conventional USB connector or a proprietary connector capable of carrying a USB data connection, including USB2, USB3 or wireless USB) or firewire™ (also known as IEEE 1394 and i-link™). Examples can also include wireless connections such as Bluetooth ™, Wi-Fi™, or Wi-Fi Direct™ (also known as IEEE802.11x).

In this example, a Virtual Network Computing (VNC) type connection is used to allow display data from the mobile device 20 to be transmitted to the in vehicle system 30 for display on the display 36 of the in-vehicle apparatus 30. This connection may also be used to enable the in-vehicle system 30 to transmit control signals via channel 40 to the mobile device 20 and to allow the mobile device 20 to transmit control signals via channel 40 to the in vehicle system 30. It will be appreciated that other approaches may be used instead of VNC such as X Window System (or X11), a terminal mode system such as MirrorLink™ (including Samsung's Drive Link™), DisplayLink™, or client/server HTML5.

Thus there has now been described a context and schematic examples of an approach for connecting a mobile device to an in vehicle system to achieve the simultaneous display of differing mobile-device-supplied content on both an in vehicle display and a mobile device display.

In the context of the present examples, the connection from the mobile device 20 to the in-vehicle system 30 can be configured to disable the normal mobile device user interface, while allowing partial or full use of the mobile device via vehicle controls. By implementing this approach, access by a vehicle operator to the mobile device can be controlled so as to allow safe use, and in some cases to also restrict some normal functionality of the mobile device when connected to the vehicle. It will also allow users to still be psychological connection with their own mobile device. The exact location 11 to which the mobile device 20 is received in the vehicle can vary, but this location can be a location that is visible to the vehicle operator and can in some instances be a location that it within easy reach of the vehicle operator which the vehicle is in use. In some examples, the receiving location 11 can be configured to provide for wired or inductive charging of the mobile device 30 while received in the receiving location 11. Wired charging may use a conventional wired connection either separate to or in common with a wired data connection. Examples include powered USB connections including those using proprietary connectors. Inductive charging may be performed using technology such as Qi compatible technology or other approaches such as NFC, Touchstone, Powermat, WiPower, or UL 2738 can be used.

In examples where the mobile device display 26 is turned off when the mobile device is received in the receiving location 11 and connected to the in-vehicle system 30 the functions of the mobile device appear to have been be transferred to the in vehicle system display(s) 3, 5, 7, 9, 36. In terms of safety, this can psychologically disconnect the vehicle operator from wanting to interact directly with their mobile device 20, and allows the vehicle operator to safely use the mobile device features through the vehicle controls. In addition, in examples where the display of the mobile device is not turned off but is replaced with a trackpad type input mode, this enables the mobile device display 26 to be used as an additional controller for the mobile device functionality now appearing on the in-vehicle system display(s).

In some examples, a vehicle operator having a mobile device may interact with the vehicle in the following manner. The vehicle operator after entering the vehicle, docks his mobile device 20 into a receiving location 11 in the vehicle. The mobile device 20 connects to the in-vehicle system 30, starts charging wirelessly and screen content transfers to vehicle in vehicle system display(s) 3, 5, 7, 9, 36. Any display backlight of the mobile device can be turned off, saving power and speeding charge. Other in-vehicle system controls such as those which may be located on the dashboard, on the steering wheel, or adjacent or integrated into one or more in vehicle system displays 3, 5, 7, 9, 36 can operate the mobile device user interface as shown on the in vehicle system display(s). A touch screen input of the in vehicle system 30 can also be used to operate the features on the mobile device, including launching, operating and closing sub-sections of functionality such as mobile device apps etc.

In addition, the vehicle operator can use the screen of the mobile device as a trackpad type input enabling use of mobile device style "flick" and "squeeze/stretch" inputs. Additionally, the trackpad interface may be able to receive inputs in the form of characters or numerals drawn onto the trackpad interface displayed on the mobile device. Thus some or all of the full range of input gestures and approaches normally possible with the mobile device user interface can be made available by way of the trackpad interface in order for the vehicle operator to access the functionality of the mobile device as displayed via the in-vehicle system display(s).

In some examples, the trackpad style input provided using the display of the mobile device could also be used to provide inputs to functionality of the in vehicle system.

In the discussion of the trackpad style input above, it is assumed that the display 26 of the mobile device 20 has a touchscreen functionality. It is however possible to utilise other input options provided by the mobile device. For example, if the mobile device is an iPod™ having the touch-sensitive control "wheel", the input functionality of that touch-sensitive input can be controlled to remain available for control of the playback from that device despite the device being used in a terminal mode type capacity to provide its functionality to the in-vehicle system. In another example, other scroll-type sensors such as dedicated touch sensitive slide areas, roller balls or click wheels. Further examples could include user-identification sensors such as fingerprint readers, camera sensors or other biometric sensors that can identify the operator and load a preconfigured default behaviour profile based upon previous selections of control combinations and/or interface arrangement options by that operator. In further examples where either the vehicle or the mobile device has a location function (such as a sat-nav based on GPS, GLONASS or Galileo or other radio-navigation system such as LORAN-C), where the mobile device has a motion sensing input element such as a gyro, accelerometer or magnetometer, movement sensed by such a motion sensing input could be used to augment the location finding function. In further examples, any inputs made using the user interface of the mobile device could be confirmed to the operator performing an input by use of haptic feedback responsive to a user interface entry being made.

It will therefore be understood that a mobile device received in a vehicle can have its functionality made available via one or more displays of an in-vehicle system. It will also be understood that a display of the mobile device can be turned off entirely or used for a touchpad type input device to control the functionality of the mobile device even while that functionality is presented via the in-vehicle system rather than via the display of the mobile device.

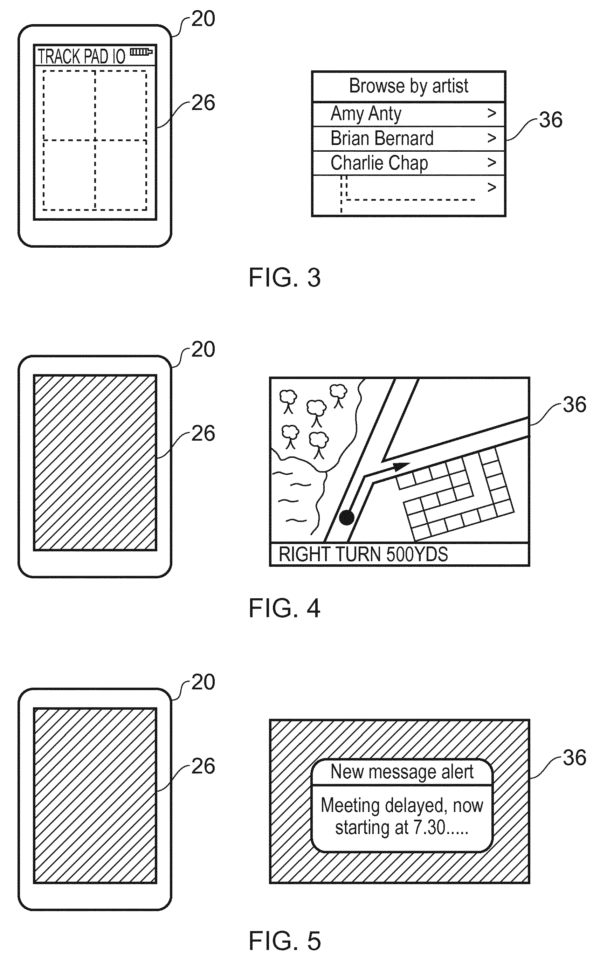

Illustrative examples of simultaneous display of different mobile device originating content on an in-vehicle display and a display of the mobile device are now discussed with reference to Figures 3 to 5.

Figure 3 shows an example of simultaneous displaying of different mobile device originating content on the display of the mobile device and an in vehicle display. In this example, the display 26 of the mobile device 20 is showing an on-screen display indicating that a trackpad interface is active while the in vehicle system display 36 is displaying an audio selection interface from the mobile device 20 that controls access to audio content stored in the mobile device 20.

Figure 4 shows an example of simultaneous displaying of different mobile device originating content on the display of the mobile device and an in vehicle display. In this example, the display 26 of the mobile device 20 is showing no content (i.e. display and/or backlight is off) while in fact a trackpad interface using the touch-sensitive elements of the screen to operate regardless of the status of the display elements of the screen. At the same time, the in vehicle system display 36 is displaying a navigation interface from the mobile device 20 that controls access to map data stored in the mobile device and displays instructions generated by a navigation application of the mobile device 20.

Figure 5 shows an example of simultaneous displaying of different mobile device originating content on the display of the mobile device and an in vehicle display. In this example, the display 26 of the mobile device 20 entirely off with no trackpad function active. As the same time the in vehicle system display 36 is displaying a messaging alert generated by the mobile device 20 in relation to a message received by the mobile device 20.

Thus it will be understood that a wide range of mobile device functions can be provided via the in vehicle system while simultaneously providing for different mobile device originating content such as a trackpad interface to be made available via the display of the mobile device.

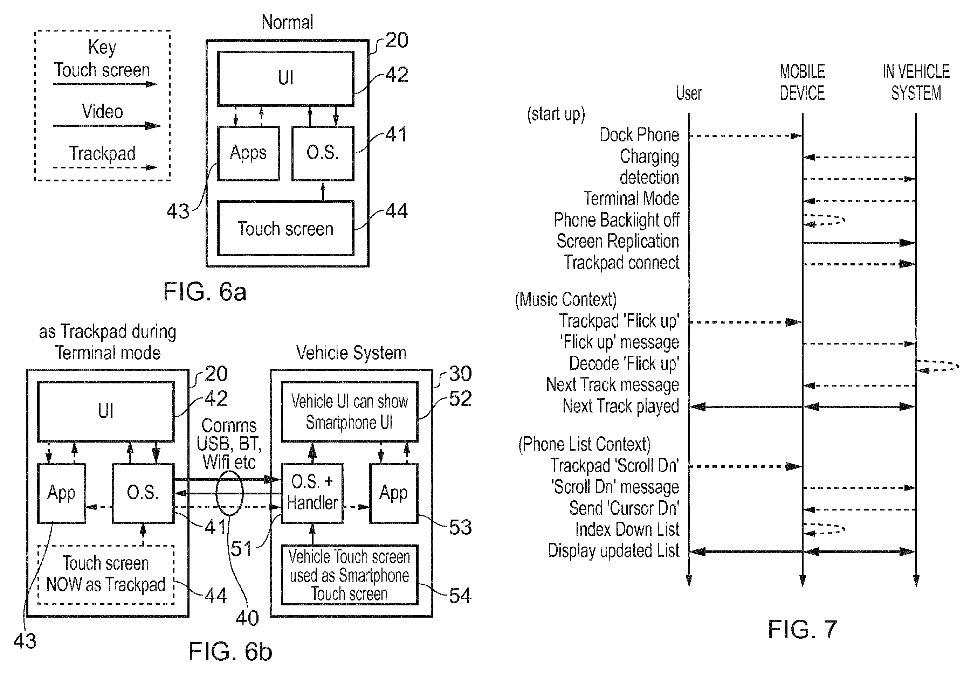

Referring now to Figures 6 and 7, further illustration of the operation of the mobile device and in-vehicle system to achieve the functionality described above will be provided.

In the present examples, the following technologies are relied upon to provide the functionality as between the mobile device and the in vehicle system. It will of course be apparent that equivalent functionality may be provided within the scope of the present teachings using differing technological implementations.

As described above, a data connection method is used to establish a connection between the mobile device and the in vehicle system. Examples of such a data connection method include, e.g., USB, Bluetooth, Wifi etc.

In examples where the mobile device is to be charged during operation within the vehicle, a detection mechanism is used to detect when charging has commenced. For a wired charging connection (e.g. USB, dedicated power connector) this could be a detection that a charging current is being drawn via the wired connection. For a wireless (e.g. inductive) charging connection, this could be a communication via the wireless charging mechanism that charging is underway or a detection that a charging current is being supplied to the in-vehicle power supply element of the wireless charging system.

For mobile devices that can be used in multiple different orientations, a detection mechanism is used to detect the orientation of the mobile device, so that trackpad messages can be correctly oriented. If one or more of the data and charging connections are via physical connectors which are arranged in the vehicle so as to force a particular orientation of the mobile device, the orientation may be known or may be determined upon detection of the device type (such that the device type can instruct the in vehicle system as to the orientation required to interface with the physical connectors). Alternatively or additionally, the mobile device maybe able to detect its orientation by detecting how the device was moved into location. For example a sliding movement of a tilting movement may be detectable by sensors such as accelerometers within the mobile device. If the data and/or power connectors are either freely movable wired connections or wireless connections, then the orientation detection may be made using an inbuilt orientation detection element of the mobile device. The mobile device can then provide the self-determined orientation to the in-vehicle system. Alternatively, the in vehicle system may be able to detect the mobile device orientation, for example using a present adjustment position of a mobile device restraint element that operates to hold the mobile device in position during vehicle operation.

Also, a mechanism is used to disconnect the mobile device display from the normal operation of the mobile device. This can be provided by way of an additional application or app for the mobile device to enable this functionality, or may be a procedure available within the operating system of the mobile device. This mechanism provides for output of the "normal" display content from the mobile device via the data connection instead of via the in-built display. In some examples, a low level application service in the mobile device may be utilised to detect and trigger the terminal mode function and disconnect the mobile device touch screen from its normal connection to the mobile device operating system. Thus, responsive to some form of docking action or connection (which could be either a physical docking action or a connection establishment action and may be automatically or manually detected) the terminal mode function can be started by commencing the terminal mode connection request to/from the vehicle. Examples of ways of detecting the docking or connection action could also include detecting a cable connection, detecting a cradle connection, NFC detection, Qi detection, or for a manual approach placing the device into a correct location by a user. As part of the terminal mode connection process thus commenced, the disconnection of the normal output from the mobile device display and the commencement of the terminal mode input mode on the mobile device can be started.

The transfer of display data generated by the mobile device to the in-vehicle device is achieved by a screen replication technology such as a terminal mode function. As noted above, examples of suitable technologies include Mirrorlink, VNC, client/server HTML5, Display Link™ etc.

The handling of the trackpad type interface on the display of the mobile device can be provided via a service in the mobile device. This may be a service included within the mobile device operating system or may be provided by an application or app for the mobile device. Depending on the implementation selected for control of the mobile device in the terminal mode/screen transfer operation mode the trackpad signal from the mobile device display may be provided directly to the mobile device operating system or may be transmitted directly to the in vehicle system which would then send the input commands back to the mobile device, to be a carried out in respect of the operation of the mobile device content presented via the in vehicle system.

Figure 6a is a schematic illustration of logical elements of a mobile device in a normal operation mode. Thus in the representation of this figure, the mobile device 20 runs an operating system 41 which provides a user interface 42 (which is displayed on the display of the mobile device) which can also provide access to functionality from apps 43 and for which input is received and the user interface displayed via the touch input functionality of the touchscreen 44.

Figure 6b is a schematic illustration of logical elements of a mobile device and an in vehicle system in a cooperatively connected mode. In this example, the operating system 41, user interface 42 and app 43 output of the mobile device is output via the connection 40 to the in vehicle system 30 instead of being output to the mobile device display 26. Within the in vehicle system 30, and operating system handler 51 receives the display information (which can be referred to as a picture or video stream regardless of the actual content in the display output) and provides it for display on a screen 3, 5, 7, 9, 36 of the in vehicle system via the user interface 52 of the in vehicle system. In some implementations, the in-vehicle system at this time displays only the content from the mobile device and in other implementations the in vehicle system also displays content from itself or from other systems. The functionality to provide for display of the mobile device originating content using the in-vehicle system may be provided as an app 53 within the in vehicle system. In this example, both the touchscreen input function 44 of the mobile device and a touchscreen function 54 of the in vehicle system can be used to provide input. The touchscreen input 44 of the mobile device is used as a trackpad type input mechanism for either the mobile device originating content or for both the mobile device originating content and other content displayed by the in vehicle system. The touchscreen input 54 of the in vehicle system functions as a conventional touchscreen interface accepting inputs for content displayed at the input location on the touchscreen 54.

Figure 7 is a schematic representation of data flows between a mobile device and an in vehicle system in three example operation contexts.

In a start-up context, a user or vehicle operator docks the mobile device into the receiving location 11 provided for this purpose in the vehicle. In response to this docking, the mobile device commences charging from a vehicle power supply and the charging commence detection by the in-vehicle system leads to establishment of the terminal mode type data connection. This example assumes a wireless charge such that the wireless charge detection is used as a trigger to establish a wireless data connection. In examples where the charging and/or data connection is via a physical or wired channel, the data connection may be established prior to or at the same time as commencement of charging.

Once the terminal mode type connection is established, the mobile device backlight may be turned off as discussed above.

Also once the terminal mode type connection has been established, screen replication from the mobile device to the in vehicle system can commence as can establishment of the trackpad input connection from the mobile device touchscreen input to the in vehicle system. As discussed above, the trackpad connection may be direct (i.e. that trackpad commands are passed to the in vehicle system which passes them back via the terminal mode connection to the mobile device operating system/app in use) or indirect (i.e. that the mobile device operating system/app in use receives the input and includes the result of the input to control the output provided to the in vehicle system by way of the replicated display.

The trackpad functionality can allow for a variety of inputs to be received via the touchscreen input of the mobile device. These can include single touch trackpad functions, such as scroll up/down for lists of music, contacts; and scroll left/right for volume; etc. These can also include "flick"' gestures, such as page scroll up/down or "back"/"enter" to select a function. These can also include multitouch trackpad functions, such as zoom in/out for map or image based functions. These could also include gesture or character recognition by the mobile device, enabling for example long lists of music/contacts navigable by inputting one or more characters to search or shortcut through the list. These could also allow haptic feedback from the mobile device, to give the user feedback that the input has been received via the touchpad interface.

As shown in Figure 7, contextual examples of the trackpad inputs are now discussed. In the example music context, during playback of a an audio track from the mobile device via the in vehicle system a user can provide a "flick up" gesture via the trackpad, which in turn causes a flick up message to be provided from the mobile device to the in vehicle system. The flick up message is then decoded by the in vehicle system and used to provide a text track command to the mobile device. This then causes the mobile device to output audio content from the next track in a list of audio tracks stored in the mobile device.

In the example phone list context, during display of a list of contacts from the mobile device on the display of the in vehicle system, a user can provide a "scroll down" gesture via the trackpad, which in turn causes a scroll down message to be provided from the mobile device to the in vehicle system. The scroll down message is then decoded by the in vehicle system and used to provide a cursor down command to the mobile device. The mobile device consequently alters the display output to move down the list of contacts such that the replicated screen output from the mobile device causes the new position in the list of contacts to be displayed by the in vehicle system.

The trackpad mode can also be configured by to only act in a limited range of mobile device application contexts, or allowed to operate in all mobile device application contexts. For example, the trackpad may be limited to act only in a situation where a list is displayed, or only in a situation relating to control of audio playback or of telephone number or address searching. Such preferences could, for example, be set using a preferences input application or function of the mobile device either before operation in the terminal mode with the in vehicle system or when a second trackpad option screen is shown.

As illustrated in Figure 3 above, if the mobile device is capable of outputting two different video signals, for example due to having a dual surface video mechanism, then the mobile device may cause a trackpad user interface display to appear on the display of the mobile device. In some examples, this trackpad user interface display may be configurable to enable the setting of preferences for the behaviour of the trackpad interface, as discussed above. Such an arrangement could assist a new user or a technologically uncomfortable user with the presence and use of the trackpad input mechanism provided by the present teachings.

The arrangements of the present teachings may be additionally applicable outside the context of vehicles other than cars, vans and trucks having a dashboard type configuration as discussed above. For example, a straddle-type vehicle such as a motorcycle or motorscooter may be provided with an arrangement for connecting a mobile device to provide content therefrom to a display of the vehicle. Such an arrangement could be used for example to provide navigation information to a vehicle operator.

Although the above-described examples are presented in the context of in-vehicle use, the techniques of the present disclosure can also be applied to other contexts. One such context is that of a home or other environment for control of audiovisual content such as a so-called smartTV. In this example, the mobile device is connected to a display such as a television or monitor to enable playback on the display of audiovisual content from the mobilde device. This content may be stored on the mobile device or may be streaming content being received using the mobile device. While the content is being displayed on the display, the mobile device can then be used to receive inputs to control the playback of the content from the mobile device on the display. This may include a trackpad type interface implemented using a touchscreen of the mobile device in the way discussed above. Such a trackpad type interface may be used for cursor functions, scroll functions, or zoom functions in the manner discussed above. In addition, or alternatively, the mobile device may use other input sensors, such as a linear or angular accelerometer of the mobile device to receive input commands. Thus rotation or translation of the mobile device in space by a user may be configured to result in a selection, scroll, zoom or other function for the playback of the content from the mobile device.

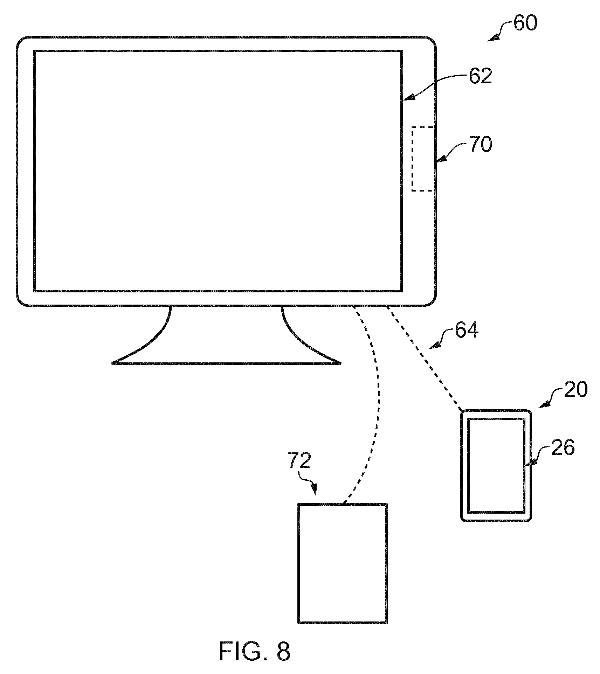

An example of such an audiovisial use is illustrated in Figure 8. In this example, a mobile device 20 having a display 26 is connectedly utilised with a television 60 having a display 62. In this example, a connection 64 is established between the mobile device 20 and the television 60 using a wired or wireless technique such as any of those discussed above. It will be appreciated that a wired connection may typically be expected to provide higher bandwidth for transmission of content from the mobile device to the television. On the other hand, it will be appreciated that a wireless connection may be expected to provide greater freedom of movement for an operator using the mobile device 20 as a content source and user interface control device for the content sent to the television 60.

To establish the connection, as there is no requirement for a dedicated mobile device receiving location in this context, the connection may be commenced by activating a smartTV application or app on the mobile device 20. Alternatively, the connection may be established automatically after bringing the mobile device 20 into physical contact or close proximity with a triggering device. This could be one or more interface units of the television 60, such that a user may activate the link by holding the mobile device 20 near a designated part 70 of the television 60. Such an approach may suit a detection technology such as NFC or Qi. A wireless charging technology such as Qi can be used as a trigger regardless of whether it is intended to leave the mobile device in range of the charging source to perform a device charging operation. Alternatively, the automatic triggering could be performed using a remote triggering device 72 located away from the television 60. An example of such a device could be a conventional television remote control or some other device such as a dedicated smartTV triggering unit. Such a unit could detect contact from or proximity (again examples of suitable technology include NFC and Qi) with the mobile device 20 and then send a connection commencement signal to the mobile device 20 and/or television 60. In examples where the mobile device 20 is connected to the television 60 with a wired connection, then the wired connection could itself be used as the trigger for establishing data connection.

Establishment of the terminal mode type connection (which again could be based upon technologies such as MirrorLink™ (including Samsung's Drive Link™), DisplayLink™, or client/server HTML5) between the mobile device 20 and the television 60 can work in the same way or similarly to the approaches discussed above for the in-vehicle context. In essence, the content from the mobile device 20 is directed to the television 60 for display on the display 62 thereof, instead of being directed to the display 26 of the mobile device 20. At the same time, the display 26 of the mobile device 20 displays either no content or content relating to a user interface for controlling the content now displayed on the display 62 of the television 60. A user input element of the mobile device 20 can be configured to provide such a user interface for control of the content from the mobile device 20 displayed on the television 60, even when no content is displayed on the display 26 of the mobile device 20. Such a user input element can include a touch-input element of a touchscreen 26 of the mobile device 20. Other user input elements may include an orientation and/or movement sensor such as a gyro, accelerometer or magnetometer. The touchscreen can be configured as a touchpad-type interface as has been discussed above. The orientation and/or movement sensor(s) can be configured to provide, for example, scrolling or selection actions based upon the movement of the mobile device 20. These imput approaches therefore can be used to control the content from the mobile device as displayed on the display 62 of the television 60.

Accordingly, it will be understood that the teachings of the present disclosure can be applied in the context of media display in a non-vehicle environment such as a smartTV environment as well as in an on-vehicle environment. It will be appreciated that the content from the mobile device which is sent to the connected device may vary between environments. For example, in the in-vehicle environment, as discussed above, content such as audio, navigation, messaging, and video may be displayed on the in-vehicle system. Taking the example of the smartTV environment, the content is most likely to be video content, although additional content representing messaging updates for example may also be used, as may audio content with a visual descriptor thereof and/or interface presentation for audio content selection.

## Claims

1. A method for using a mobile device (20) as an input device for a connected in-vehicle system (30), the method comprising:
automatically connecting the mobile device to output visual content therefrom for display on a display (36) of a connected in-vehicle system, wherein the connecting is triggered based upon docking the mobile device (20) into a receiving location (11) of the vehicle; and
presenting on a display (26) of the mobile device operable to display visual content and to receive touchscreen input, an input interface for control of visual content from the mobile device (20) displayed on the display (36) of the connected in-vehicle system (30), wherein the input interface utilises the touchscreen functionality of the display (26) of the mobile device (20) and input gestures can be made thereon in order to access the functionality of the mobile device (20) as displayed via the display (36) of the connected in-vehicle system (30), wherein the presenting step comprises turning off the display (26) of the mobile device (20) for presenting of visual content on the display (36) of the connected in-vehicle system (30).

2. The method of claim 1, wherein the input interface is a trackpad interface and the display of the mobile device is used to provide trackpad type input.

3. The method of claim 1 or 2, further comprising applying inputs received via the input interface to a source application of the visual content output from the mobile device.

4. The method of any preceding claim, wherein the input interface is for receiving inputs relating to an element of the connected system unrelated to the visual content output from the mobile device.

5. The method of any preceding claim, further comprising transmitting inputs received via the input interface from the mobile device to the connected system before being applied

6. The method of any preceding claim, wherein the mobile device comprises one or more of a mobile media device, a mobile telephone, a smartphone, a mobile navigation device, and a tablet device.

7. The method of any preceding claim, wherein the connecting step comprises establishing one or more of a data connection and a terminal mode type connection between the mobile device and the connected system.

8. The method of any preceding claim, comprising triggering the connecting based upon one or more of establishing a charging connected, establishing a physical connection, establishing a proximity connection, and commencing a wireless data connection.

9. The method of any preceding claims, wherein the connected system comprises a display screen, optionally a television.

10. A mobile device (20) comprising:
a data interface (28) operable to connect the mobile device (20) to output visual content therefrom for display on a display (36) of a connected in-vehicle system (30), wherein the connection is automatically triggered based upon docking the mobile device (20) into a receiving location (11) of a vehicle; and
a display (26) operable to display visual content and to receive touchscreen input wherein the display (26) is operable to present an input interface for controlling visual content displayed on the display (36) of a connected in-vehicle system (30), wherein the input interface utilises the touchscreen functionality of the display (26) of the mobile device (20) and input gestures can be made thereon in order to access the functionality of the mobile device (20) as displayed via the display (36) of the connected in-vehicle system (30), wherein the display (26) is operable to be turned off for presentation of visual content while the data interface (28) is outputting visual content therefrom.

11. The mobile device of claim 10, wherein the input interface is a trackpad interface.

12. The mobile device of claim 10 or 11, wherein the input interface is operable to receive inputs relating to the visual content outputted via the data interface (28).

13. The mobile device of claim 10, 11 or 12, wherein the display (26) is operable to connect to a connected system in the form of a display screen, optionally a television.

14. An in-vehicle system (30) comprising a data input configured to receive visual content from a connected mobile device (20) and display said visual content on a display (36) associated with the in-vehicle system (30) while the display (26) of the mobile device (20) is turned off for presentation of visual content, wherein the connection is automatically triggered based upon docking the mobile device (20) into a receiving location (11) of a vehicle, wherein the display (26) of the mobile device (20) comprises an input interface for controlling the visual content displayed on the display (36) associated with the in-vehicle system (30), and wherein the input interface utilises a touchscreen functionality of the display (26) of the mobile device (20) and input gestures can be made thereon in order to access the functionality of the mobile device (20) as displayed via the display (36) associated with the in-vehicle system (30).

15. A computer program product comprising system implementable instructions for:
causing a programmable mobile device to carry out the method of any of claims 1 to 9.

## Patentansprüche

1. Verfahren zur Verwendung eines Mobilgeräts (20) als Eingabevorrichtung für ein vernetztes Bordsystem (30), umfassend:
Automatisches Verbinden des Mobilgeräts zur Ausgabe von visuellem Inhalt davon zum Darstellen auf einem Display (36) eines vernetzten Bordsystems, wobei das Verbinden basierend auf dem Andocken des Mobilgeräts (20) in einer Aufnahmestelle (11) des Fahrzeugs ausgelöst wird; und
Darstellen auf einem Display (26) des Mobilgeräts, welches eingerichtet ist, um visuellen Inhalt darzustellen und Eingaben über den berührungsempfindlichen Bildschirm zu erhalten, einer Eingabeschnittstelle zur Steuerung von visuellem Inhalt der mobilen Vorrichtung (20), welcher auf dem Display (36) des vernetzten Bordsystems (30) angezeigt wird, wobei die Eingabeschnittstelle die Funktion des Displays (26) des Mobilgeräts (20) als berührungsempfindlicher Bildschirm nutzt und Eingabegesten darauf gemacht werden können, um Zugang zur Funktionalität des Mobilgeräts (20) zu erhalten, wie über das Display (36) des vernetzten Bordsystems (30) angezeigt wird, wobei der Darstellungsschritt das Ausschalten des Displays (26) des Mobilgeräts (20) zum Darstellen von visuellem Inhalt auf dem Display (36) des vernetzten Bordsystems (30) umfasst.

2. Verfahren nach Anspruch 1, wobei die Eingabeschnittstelle eine Trackpad Schnittstelle ist und das Display des Mobilgeräts genutzt wird, um eine trackpad-artige Eingabe bereitzustellen.

3. Verfahren nach Anspruch 1 oder 2, des Weiteren umfassend das Anwenden der über die Eingabeschnittstelle erhaltenen Eingaben für eine Quellenanwendung von der visuellen Inhaltsausgabe von dem Mobilgerät.

4. Verfahren nach einem der vorhergehenden Ansprüche, wobei die Eingabeschnittstelle geeignet ist, Eingaben bezüglich eines Bestandteils des vernetzten Systems zu empfangen, ohne Bezug zu der visuellen Inhaltsausgabe von dem Mobilgerät.

5. Verfahren nach einem der vorhergehenden Ansprüche, des Weiteren umfassend das Übertragen der von der Eingabeschnittstelle erhaltenen Eingaben von dem Mobilgerät zu dem vernetzten System vor deren Anwendung.

6. Verfahren nach einem der vorhergehenden Ansprüche, wobei das Mobilgerät ein oder mehrere von einer mobilen Medienwiedergabevorrichtung, einem Mobiltelefon, einem Smartphone, einem mobilen Navigationsgerät und einem Tablet-Gerät umfasst.

7. Verfahren nach einem der vorhergehenden Ansprüche, wobei der Verbindungsschritt den Aufbau einer oder mehrerer Datenverbindungen und eine Terminalmodus-Verbindung zwischen dem Mobilgerät und dem vernetzten System umfasst.

8. Verfahren nach einem der vorhergehenden Ansprüche, umfassend das Auslösen des Verbindungsaufbaus basierend auf einem oder mehrerer von einem Herstellen einer Ladeverbindung, Herstellung einer physischen Verbindung, Herstellung einer Annährungsverbindung, und Beginnen einer drahtlosen Datenverbindung.

9. Verfahren nach einem der vorhergehenden Ansprüche, wobei das vernetzte System eine Bildschirmanzeige, optional einen Fernseher, umfasst.

10. Mobilgerät (20) umfassend:
eine Datenschnittstelle (28) derart eingerichtet, das Mobilgerät (20) zur Ausgabe von visuellem Inhalt davon zum Anzeigen auf einem Display (36) eines vernetzten Bordsystems (30) zu verbinden, wobei das Verbinden basierend auf dem Andocken des Mobilgeräts (20) in eine Aufnahmestelle (11) des Fahrzeugs automatisch ausgelöst wird; und
ein Display (26) derart eingerichtet, visuellen Inhalt darzustellen und Eingaben über einen berührungsempfindlichen Bildschirm zu erhalten, wobei das Display (26) derart eingerichtet ist, eine Eingabeschnittstelle anzubieten zur Steuerung des visuellen Inhalts, welcher auf auf dem Display (36) eines vernetzten Bordsystems (30) angezeigt wird, wobei die Eingabeschnittstelle die Funktion des Bildschirms (26) des berührungsempfindlichen Bildschirms des Mobilgeräts (20) nutzt und Eingabegesten darauf gemacht werden können, um Zugang zur Funktionalität des Mobilgeräts (20) zu erhalten, wie über das Display (36) des vernetzten Bordsystems (30) angezeigt wird, wobei das Display (26) derart eingerichtet ist, zum Darstellen des visuellen Inhalts ausgeschaltet zu werden, während die Datenschnittstelle (28) den visuellen Inhalt daraus ausgibt.

11. Mobilgerät nach Anspruch 10, wobei die Eingabeschnittstelle eine Trackpad-Schnittstelle ist.

12. Mobilgerät nach Anspruch 10 oder 11, wobei die Eingabeschnittstelle derart eingerichtet ist, Eingaben bezüglich des über die Datenschnittstelle (28) ausgegebenen visuellen Inhalts zu erhalten.

13. Mobilgerät nach Anspruch 10, 11 oder 12, wobei das Display (26) eingerichtet ist zum Verbinden mit einem vernetzten System in Form einer Bildschirmanzeige, optional einem Fernseher.

14. Vernetztes Bordsystem (30) umfassend einen Dateneingang, welcher eingerichtet ist, um visuellen Inhalt von einem verbundenen Mobilgerät (20) zu empfangen und besagten Inhalt auf einem Display (36), welches dem vernetzten Bordsystem (30) zugeordnet ist, anzuzeigen, während das Display (26) des Mobilgeräts (20) zur Darstellung des visuellen Inhalts ausgeschaltet wird, wobei das Verbinden basierend auf dem Andocken des Mobilgeräts (20) in eine Aufnahmestelle (11) des Fahrzeugs automatisch ausgelöst wird, wobei das Display (26) des Mobilgeräts (20) eine Eingabeschnittstelle umfasst zur Steuerung des angezeigten visuellen Inhalts auf dem Display (36), welches dem vernetzten Bordsystem (30) zugeordnet ist, und wobei die Eingabeschnittstelle die Funktion des Displays (26) des Mobilgeräts (20) als berührungsempfindlicher Bildschirm nutzt und Eingabegesten darauf gemacht werden können, um Zugang zur Funktionalität des Mobilgeräts (20) zu erhalten, wie über das Display (36) des vernetzten Bordsystems (30) angezeigt wird.

15. Computerprogrammprodukt umfassend systemimplementierende Anleitungen zum: Bewirken der Ausführung eines Verfahrens nach einem der Ansprüche 1 bis 9 bei einem programmierbaren Mobilgerät.

## Revendications

1. Procédé permettant l'utilisation d'un dispositif mobile (20) comme un dispositif d'entrée pour un système embarqué en véhicule connecté (30), le procédé comprenant :
la connexion automatique du dispositif mobile pour en extraire du contenu visuel en vue de son affichage sur un affichage (36) du système embarqué en véhicule connecté, la connexion étant déclenchée par l'accueil du dispositif mobile (20) dans un emplacement récepteur (11) du véhicule ; et
la présentation, sur un affichage (26) du dispositif mobile utilisable pour afficher du contenu visuel et pour recevoir une entrée d'écran tactile, d'une interface d'entrée pour la commande de contenu visuel provenant du dispositif mobile (20) affiché sur l'affichage (36) du système embarqué en véhicule connecté (30), l'interface d'entrée faisant appel à la fonctionnalité d'écran tactile de l'affichage (26) du dispositif mobile (20) et des gestes d'entrée pouvant être effectués à sa surface dans le but d'obtenir l'accès à la fonctionnalité du dispositif mobile (20) telle qu'affichée par le biais de l'affichage (36) du système embarqué en véhicule connecté (30), l'étape de présentation comprenant l'extinction de l'affichage (26) du dispositif mobile (20) pour la présentation de contenu visuel sur l'affichage (36) du système embarqué en véhicule connecté (30).

2. Procédé selon la revendication 1, dans lequel l'interface d'entrée est une interface de pavé tactile et l'affichage du dispositif mobile sert à fournir une entrée de type pavé tactile.

3. Procédé selon la revendication 1 ou 2, comprenant en outre l'application d'entrées, reçues par le biais de l'interface d'entrée, à une application source de contenu visuel extrait du dispositif mobile.

4. Procédé selon l'une quelconque des revendications précédentes, dans lequel l'interface d'entrée est destinée à recevoir des entrées ayant rapport avec un élément du système connecté sans rapport avec le contenu visuel extrait du dispositif mobile.

5. Procédé selon l'une quelconque des revendications précédentes, comprenant en outre la transmission au système connecté d'entrées reçues par le biais de l'interface d'entrée depuis le dispositif mobile, avant leur application.

6. Procédé selon l'une quelconque des revendications précédentes, dans lequel le dispositif mobile comprend au moins un des dispositifs suivantes : un dispositif multimédia mobile, un téléphone mobile, un smartphone, un dispositif de navigation mobile et un dispositif tablette.

7. Procédé selon l'une quelconque des revendications précédentes, dans lequel l'étape de connexion comprend l'établissement d'une connexion de données et/ou d'une connexion de type mode terminal entre le dispositif mobile et le système connecté.

8. Procédé selon l'une quelconque des revendications précédentes, comprenant le déclenchement de la connexion en fonction d'au moins une des actions suivantes : l'établissement d'une charge connectée, l'établissement d'une connexion physique, l'établissement d'une connexion de proximité et le commencement d'une connexion de données sans fil.

9. Procédé selon l'une quelconque des revendications précédentes, dans lequel le système connecté comprend un écran d'affichage, éventuellement une télévision.

10. Dispositif mobile (20), comprenant :
une interface de données (28) utilisable pour connecter le dispositif mobile (20) pour en extraire du contenu visuel en vue de son affichage sur un affichage (36) d'un système embarqué en véhicule connecté (30), la connexion étant déclenchée automatiquement par l'accueil du dispositif mobile (20) dans un emplacement récepteur (11) d'un véhicule ; et
un affichage (26) utilisable pour afficher du contenu visuel et pour recevoir une entrée d'écran tactile, l'affichage (26) étant utilisable pour présenter une interface d'entrée pour la commande de contenu visuel affiché sur l'affichage (36) d'un système embarqué en véhicule connecté (30), l'interface d'entrée faisant appel à la fonctionnalité d'écran tactile de l'affichage (26) du dispositif mobile (20) et des gestes d'entrée pouvant être effectués à sa surface dans le but d'obtenir l'accès à la fonctionnalité du dispositif mobile (20) telle qu'affichée par le biais de l'affichage (36) du système embarqué en véhicule connecté (30), l'affichage (26) étant utilisable pour être éteint pour la présentation de contenu visuel pendant que l'interface de données (28) en extrait du contenu visuel.

11. Dispositif mobile selon la revendication 10, dans lequel l'interface d'entrée est une interface de pavé tactile.

12. Dispositif mobile selon la revendication 10 ou 11, dans lequel l'interface d'entrée est utilisable pour recevoir des entrées ayant un rapport avec le contenu visuel extrait via l'interface de données (28).

13. Dispositif mobile selon la revendication 10, 11 ou 12, dans lequel l'affichage (26) est utilisable pour se connecter à un système connecté prenant la forme d'un écran d'affichage, éventuellement d'une télévision.

14. Système embarqué en véhicule (30), comprenant une entrée de données configurée pour recevoir du contenu visuel provenant d'un dispositif mobile connecté (20) et afficher ledit contenu visuel sur un affichage (36) associé au système embarqué en véhicule (30) pendant que l'affichage (26) du dispositif mobile (20) est éteint pour la présentation de contenu visuel, la connexion étant déclenchée automatiquement par l'accueil du dispositif mobile (20) dans un emplacement récepteur (11) d'un véhicule, l'affichage (26) du dispositif mobile (20) comprenant une interface d'entrée pour la commande du contenu visuel affiché sur l'affichage (36) associé au système embarqué en véhicule (30), et l'interface d'entrée faisant appel à une fonctionnalité d'écran tactile de l'affichage (26) du dispositif mobile (20) et des gestes d'entrée pouvant être effectués à sa surface dans le but d'obtenir l'accès à la fonctionnalité du dispositif mobile (20) telle qu'affichée par le biais de l'affichage (36) associé au système embarqué en véhicule (30).

15. Produit-programme d'ordinateur comprenant des instructions exécutables par un système pour :
amener un dispositif mobile programmable à mettre en oeuvre le procédé selon l'une quelconque des revendications 1 à 9.
